(19) **Europäisches Patentamt / European Patent Office / Office européen des brevets**

(11) **EP 2 232 489 B1**

(12) **FASCICULE DE BREVET EUROPEEN**

(45) Date de publication et mention
de la délivrance du brevet:
**07.02.2018 Bulletin 2018/06**

(21) Numéro de dépôt: **08865193.0**

(22) Date de dépôt: **11.12.2008**

(51) Int Cl.:
*G10L 19/02* (2013.01)    *H04N 19/60* (2014.01)

(86) Numéro de dépôt international:
**PCT/FR2008/052286**

(87) Numéro de publication internationale:
**WO 2009/081003 (02.07.2009 Gazette 2009/27)**

(54) **CODAGE/DECODAGE PAR TRANSFORMEE, A FENETRES ADAPTATIVES**

AUF TRANSFORMATION BASIERENDE CODIERUNG/DECODIERUNG MIT ADAPTIVEN FENSTERN

TRANSFORM-BASED CODING/DECODING, WITH ADAPTIVE WINDOWS

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.12.2007  FR 0760258**

(43) Date de publication de la demande:
**29.09.2010  Bulletin 2010/39**

(73) Titulaire: **Orange
75015 Paris (FR)**

(72) Inventeurs:
 • **PHILIPPE, Pierrick**
   **F-35520 Melesse (FR)**
 • **VIRETTE, David**
   **F-22560 Pleumeur-Bodou (FR)**

(74) Mandataire: **Cabinet Plasseraud
66, rue de la Chaussée d'Antin
75440 Paris Cedex 09 (FR)**

(56) Documents cités:
**WO-A-91/16769    WO-A-98/02971**

• **EDLER B: "CODIERUNG VON AUDIOSIGNALEN MIT UEBERLAPPENDER TRANSFORMATION UND ADAPTIVEN FENSTERFUNKTIONEN. ÖCODING OF AUDIO SIGNALS WITH OVERLAPPING BLOCK TRANSFORM AND ADAPTIVE WINDOW FUNCTIONS" FREQUENZ, SCHIELE UND SCHON, BERLIN, DE, vol. 43, no. 9, 1 septembre 1989 (1989-09-01), pages 252-256, XP000052987 ISSN: 0016-1136**

• **SMART G ET AL: "Filter bank design based on time domain aliasing cancellation with non-identical windows" PROCEEDINGS OF THE INTERNATIONAL CONFERENCE ON ACOUSTICS, SPEECH, AND SIGNAL PROCESSING (ICASSP), ADELAIDE, APR. 19 - 22, 1994, vol. iii, 19 avril 1994 (1994-04-19), pages III-185-III-188, XP010134248 ISBN: 978-0-7803-1775-8**

• **HENRIQUE S MALVAR: "Biorthogonal and Nonuniform Lapped Transforms for Transform Coding with Reduced Blocking and Ringing Artifacts" IEEE TRANSACTIONS ON SIGNAL PROCESSING, vol. 46, no. 4, 1 avril 1998 (1998-04-01), pages 1043-1053, XP011058114 IEEE, NEW YORK, NY, US ISSN: 1053-587X**

• **XIANG-GEN XIA ET AL: "Malvar Wavelets with Asymmetrically Overlapped Windows" IEEE TRANSACTIONS ON SIGNAL PROCESSING, vol. 44, no. 3, 1 mars 1996 (1996-03-01), pages 723-728, XP011057367 IEEE, NEW YORK, NY, US ISSN: 1053-587X**

• **TAKASHI MOCHIZUKI ET AL: "IMAGE CODING USING ADAPTIVE BLOCKSIZE PRINCEN-BRADLEY TRANSFORM" PROCEEDINGS OF THE 1991 CONFERENCE ON VISUAL COMMUNICATION AND IMAGE PROCESSING, BOSTON, NOV. 11 - 13, 1991, vol. 1605, 11 novembre 1991 (1991-11-11), pages 434-444, XP000479253 SPIE, BELLINGHAM, US**

**EP 2 232 489 B1**

• PRINCEN J P ET AL: "ANALYSIS/SYNTHESIS FILTER BANK DESIGN BASED ON TIME DOMAIN ALIASINGCANCELLATION" IEEE TRANSACTIONS ON ACOUSTICS, SPEECH AND SIGNAL PROCESSING, IEEE INC. NEW YORK, vol. ASSP-34, no. 5, 1 octobre 1986 (1986-10-01), pages 1153-1161, XP000674042 ISSN: 0096-3518

**Description**

La présente invention concerne le codage/décodage de signaux numériques.

Dans un schéma de codage par transformée, pour obtenir une réduction de débit, on cherche habituellement à réduire la précision accordée au codage des échantillons, en s'assurant qu'un minimum de dégradation soit perçu. À cette fin, la réduction de précision, effectuée par une opération de quantification, est contrôlée à partir de pondérations perceptives. Ce modèle, basé sur une connaissance des propriétés de l'oeil (par exemple pour du codage vidéo) ou de l'oreille humaine (pour du codage audio), permet de doser le bruit de quantification dans les bandes de fréquence les moins perceptibles.

Afin d'utiliser les informations issues du modèle psychovisuel ou psychoacoustique, essentiellement données dans le domaine fréquentiel, il est classique de réaliser une transformation temps/fréquence, la quantification s'effectuant dans ce domaine fréquentiel.

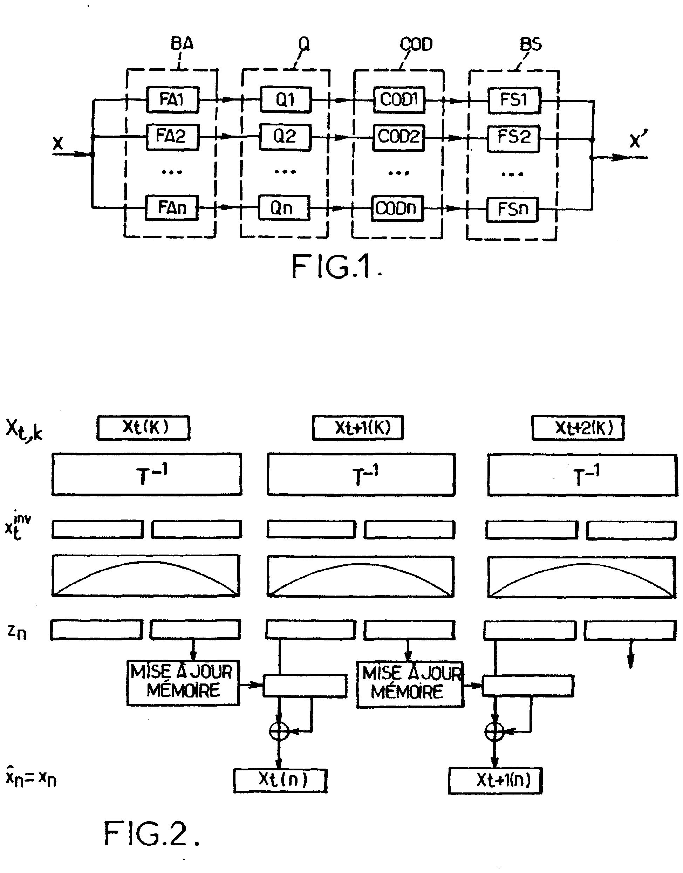

La figure 1 illustre schématiquement la structure d'un codeur par transformée, avec :

- un banc BA de filtres d'analyse FA1, ..., FAn, recevant un signal d'entrée X,
- un bloc de quantification Q (comportant des modules de quantification par bandes QI, ..., Qn), suivi d'un bloc de codage COD (comportant des modules de codage COD1, ..., CODn),
- et un banc BS de filtres de synthèse FS1, ..., FSn délivrant le signal codé X'.

Pour réduire encore le débit avant transmission, les échantillons fréquentiels quantifiés sont codés, souvent à l'aide d'un codage dit "entropique" (codage sans perte). La quantification est réalisée de façon classique par un quantificateur scalaire, uniforme ou non, ou encore par un quantificateur vectoriel.

Le bruit introduit dans l'étape de quantification est mis en forme par le banc de filtres de synthèse (appelé également « transformation inverse »). La transformation inverse, liée à la transformée d'analyse, doit donc être choisie afin de bien concentrer le bruit de quantification, fréquentiellement ou temporellement, afin d'éviter qu'il ne devienne perceptible.

La transformation d'analyse doit concentrer au mieux l'énergie du signal afin de permettre un codage aisé des échantillons dans le domaine transformé. On parle de compaction d'énergie. En particulier, le gain de codage de la transformée d'analyse, qui dépend du signal d'entrée, doit être maximisé dans la mesure du possible. On utilise à cet effet une relation (1) du type :

$$SNR = G_{TC} + K \cdot R$$

où $K$ est un terme constant qui peut avantageusement valoir 6,02.

Ainsi, le rapport signal à bruit obtenu (noté $SNR$ dans la relation (1) ci-avant) est proportionnel au nombre de bits par échantillon sélectionné (noté $R$ dans la relation (1) ci-avant) augmenté de la composante $G_{TC}$ qui représente le gain de codage de la transformée.

Plus le gain de codage est important et plus la qualité de reconstruction est bonne. On comprend donc l'importance que revêt la transformation en codage. Elle assure un codage aisé des échantillons, grâce à son aptitude à concentrer à la fois l'énergie du signal (par la partie analyse) et le bruit de quantification (par la partie synthèse).

Les signaux audio ou vidéo étant notoirement non stationnaires, il convient d'adapter la transformation temps fréquence au cours du temps, en fonction de la nature du signal entrant dans le banc de filtres.

On décrit ci-après quelques applications à des techniques de codage usuelles.

Dans le cas de transformées modulées, les techniques de codage audio normalisées intègrent des bancs de filtres modulés en cosinus qui permettent de mettre en oeuvre ces techniques de codage à l'aide d'algorithmes rapides, basés sur des transformées en cosinus ou des transformées de Fourier rapides.

Parmi les transformées de ce type, la transformée la plus communément utilisée (en codage MP3, MPEG-2 et MPEG-4 AAC en particulier) est la transformée MDCT (pour "*Modified Discrete Cosine Transform*") dont une expression est présentée ci-dessous :

$$X_k^t = \sum_{n=0}^{2M-1} x_{n+tM}\, p_k\left(n\right)\ 0 \le k < M$$

avec les notations suivantes :

- $M$ représente la taille de la transformée,

- $x_{n+tM}$ sont les échantillons du signal numérisé à une période $\frac{1}{F_e}$ (inverse de la fréquence d'échantillonnage) à l'instant $n+tM$,
- $t$ est un indice de trame,
- $X^t_k$ sont les échantillons dans le domaine transformé pour la trame t,
- $$p_k(n) = h_a(n) C_{n,k} = \sqrt{\frac{2}{M}} h_a(n) \cos\left[\frac{\pi}{4M}(2n + 1 + M)(2k + 1)\right]$$ est une fonction de base de la transformée dont :

    ◦ le terme $h_a(n)$ est appelé filtre prototype ou "*fenêtre de pondération d'analyse*" et couvre *2M* échantillons,
    ◦ et dont le terme $C_{n,k}$ définit la modulation.

Cette transformée s'applique au traitement du son. Elle s'applique aussi au traitement de la vidéo, en particulier en codage d'images fixes, où la transformée est appliquée successivement de façon classique sur les lignes et les colonnes. Ce principe s'étend encore aux signaux de dimension supérieure à deux.

Pour restituer les échantillons temporels initiaux, la transformation inverse suivante, au décodage, est appliquée afin de reconstituer les échantillons $0 \leq n < M$ qui se situent alors dans une zone de recouvrement de deux transformées consécutives. Les échantillons décodés sont alors donnés par :

$$\hat{x}_{n+tM+M} = \sum_{k=0}^{M-1}\left[X^{t+1}_k p^s_k(n) + X^t_k p^s_k(n+M)\right],$$

où $p^s_k(n) = h_s(n) C_{n,k}$ définit la transformée de synthèse, la fenêtre de pondération de synthèse étant notée $h_s(n)$ et couvrant également *2M* échantillons.

L'équation de reconstruction donnant les échantillons décodés peut s'écrire aussi sous la forme suivante :

$$\hat{x}_{n+tM+M} = \sum_{k=0}^{M-1}\left[X^{t+1}_k h_s(n) C_{k,n} + X^t_k h_s(n+M) C_{k,n+M}\right]$$

$$= h_s(n) \sum_{k=0}^{M-1} X^{t+1}_k C_{k,n} + h_s(n+M) \sum_{k=0}^{M-1} X^t_k C_{k,n+M}$$

Cette autre présentation de l'équation de reconstruction revient à considérer que deux transformées en cosinus inverse peuvent être effectuées successivement sur les échantillons dans le domaine transformé $X^t_k$ et $X^{t+1}_k$, leur résultat étant ensuite combiné par une opération de pondération et addition. Ce procédé de reconstruction est présenté sur la figure 2 (les échantillons dans le domaine transformé étant notés $X_{t,k}$ et les échantillons reconstruits dans le domaine temporel étant notés $\hat{x}_n$).

Habituellement, une transformée MDCT utilise des fenêtres identiques à l'analyse et à la synthèse et ainsi $h(n) = h_a(n) = h_s(n)$.

Afin d'assurer la reconstruction exacte (dite "*parfaite*") du signal (selon la condition $\hat{x}_{n+tM} = x_{n+tM}$), il convient de choisir une fenêtre prototype $h(n)$ satisfaisant quelques contraintes.

Les relations suivantes sont satisfaisantes afin de permettre une reconstruction parfaite. Elles sont habituellement retenues pour construire des fenêtres adaptées à la transformée MDCT :

$$\begin{cases} h(2M - 1 - n) = h(n) \\ h^2(n) + h^2(n+M) = 1 \end{cases} \qquad (2)$$

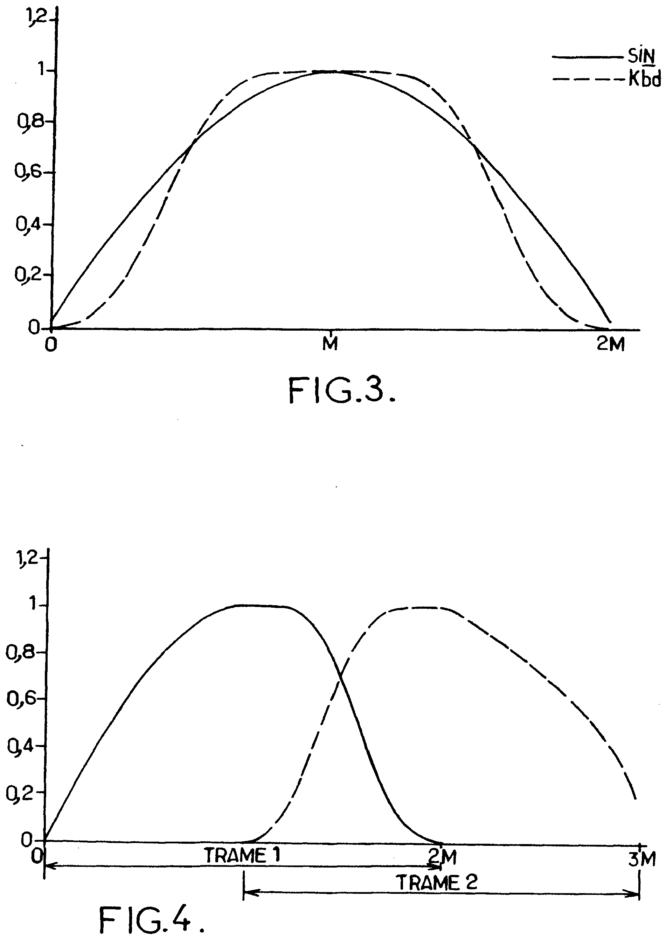

Les fenêtres sont de symétrie paire par rapport à un échantillon central, comme illustré dans les exemples présentés sur la figure 3.

Il est relativement simple de satisfaire ces deux contraintes simples et, à cet effet, un filtre prototype classique peut être constitué d'une fenêtre sinusoïdale (en trait plein sur la figure 3) qui s'écrit comme suit :

$$h(n) = \sin\left[\frac{\pi}{2M}(n+0.5)\right]$$

Bien entendu, d'autres formes de filtre prototype existent, telles que les fenêtres définies dans la norme MPEG-4 sous le nom de KBD (pour les "*Dérivées de Kaiser Bessel*" correspondant aux courbes en traits pointillés sur la figure 3), ou encore les fenêtres à faible recouvrement (ou *"Low Overlap"*).

Compte tenu de la nécessité d'adapter la transformée au signal à coder, les techniques de l'art antérieur permettent un changement au cours du temps de la transformée utilisée, ce qui est appelé par la suite une "*commutation de fenêtre*". On considère ici que les changements de transformées conservent néanmoins la taille des fenêtres utilisées de sorte que seuls les coefficients de pondération des fenêtres peuvent changer au cours du temps.

Les expressions présentées ci-dessus pour le cas d'une fenêtre constante sont reprises ci-dessous et adaptées au cas d'un changement de fenêtre. Sans perte de généralité, le recouvrement n'impliquant que deux trames consécutives pour la transformée MDCT, la transition pour deux trames consécutives notées $T_1$ et $T_2$ est explicitée comme suit. La première trame $T_1$ utilise une fenêtre d'analyse $h_{a1}$ et la seconde trame $T_2$ utilise une fenêtre d'analyse $h_{a2}$. Les fenêtres de synthèse utilisées à la reconstruction sont choisies identiques aux fenêtres d'analyse dans les parties de recouvrement entre les deux fenêtres $h_{a1}$ et $h_{a2}$. Ainsi :

$$h_{a1}(n+M) = h_{s1}(n+M)$$

$$h_{a2}(n) = h_{s2}(n)$$

$$\text{pour } 0 \le n < M$$

A la différence du cas précédent où une même fenêtre est utilisée pour plusieurs trames successives, il n'existe plus de relation directe entre la première et la seconde moitié des fenêtres d'analyse, ce qui signifie que le coefficient de pondération $h_{a1}(n+M)$ peut être indépendant du coefficient $h_{a1}(n)$. De façon analogue, le coefficient $h_{a2}(n)$ peut être indépendant du coefficient $h_{a2}(n+M)$. Ainsi, il est possible de faire évoluer au cours du temps la forme de la fenêtre d'analyse.

Les conditions de reconstruction *"parfaite"* deviennent :

$$\begin{cases} h_{a1}^2(n+M) & + & h_{a2}^2(n) & = & 1 \\ h_{a1}(2M-1-n).h_{a1}(n+M) & - & h_{a2}(M-1-n).h_{a2}(n) & = & 0 \end{cases} \text{pour } 0 \le n < M$$

La solution classique consiste à choisir : $h_{a1}(n+M)=h_{a2}(M-1-n)$ $(0 \le n<M)$ pour vérifier très simplement les conditions ci-dessus.

Ainsi, en référence à la figure 4, la fenêtre d'analyse utilisée dans la première moitié de la trame $T_2$ (courbe en traits pointillés de la figure 4) est une version "*miroir*" de la fenêtre d'analyse utilisée dans la seconde moitié de la trame $T_1$ (courbe en trait plein de la figure 4). En d'autres termes, afin d'assurer la reconstruction parfaite, il est préconisé, au sens de l'état de l'art, des transitions progressives passant par des tronçons partageant, à un effet miroir près, les mêmes fenêtres d'analyse.

Une réalisation de ce type est décrite dans le document D1 : EDLER B: "CODIERUNG VON AUDIOSIGNALEN MIT UEBERLAPPENDER TRANSFORMATION UND ADAPTIVEN FENSTERFUNKTIONEN", FREQUENZ, SCHIELE UND SCHON, BERLIN, DE, vol. 43, no. 9, 1 septembre 1989 (1989-09-01), pages 252-256 (XP000052987 - ISSN: 0016-1136).

Un autre document général de l'état de la technique est D2 :

SMART G ET AL: "Filter bank design based on time domain aliasing cancellation with non-identical windows" PROCEEDINGS OF THE INTERNATIONAL CONFERENCE ON ACOUSTICS, SPEECH, AND SIGNAL PROCESSING (ICASSP), ADELAIDE, APR. 19 - 22, 1994, vol. iii, 19 avril 1994 (1994-04-19), pages III-185-III-188 (XP010134248 - ISBN: 978-0-7803-1775-8).

Cet effet miroir se retrouve également au niveau des fenêtres de synthèse de par l'égalité imposée entre fenêtres de synthèse et d'analyse.

Du fait de l'effet miroir, toute insertion de *"zéros"* (coefficients de pondération à la valeur 0) à la suite du coefficient $h_{a1}(n+M)$ dans la fenêtre $h_{a1}$ aura pour effet d'insérer autant de zéros au début de la fenêtre $h_{a2}$ (en $h_{a2}(n)$). De plus, cette insertion de zéros implique d'imposer autant de coefficients à la valeur de 1 pour les rangs inversés $M$-$n$. Plus précisément :

$$h_{a1}(n+M) = h_{a2}(M-1-n)$$

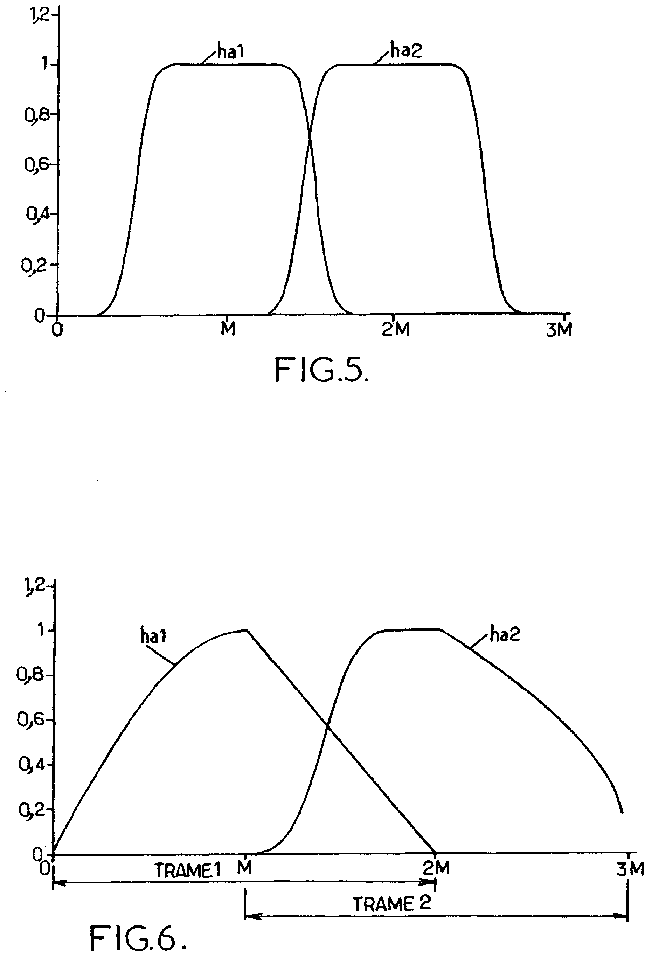

De ce fait, l'allure d'une telle fenêtre incluant de nombreux zéros est semblable à celle d'une fenêtre rectangulaire, comme illustré sur la figure 5. Or, une fenêtre rectangulaire a une mauvaise résolution fréquentielle et présente une forte discontinuité. Il s'agit là d'un premier problème inhérent au fonctionnement des codeurs/décodeurs de l'art antérieur.

Dans les codeurs/décodeurs normalisés connus, le codeur sélectionne le plus souvent la transformée à utiliser au cours du temps. Ainsi, dans la norme AAC telle que décrite dans le document :

"Information technology - Coding of audio-visual objects - Part 3: Audio", ISO/IEC 14496-3 (2001),

le codeur sélectionne et transmet la forme de fenêtre correspondant à la seconde moitié de la fenêtre d'analyse, la première moitié étant induite par la sélection effectuée pour la trame précédente. Dans la norme AAC, un bit est transmis au décodeur afin de permettre, à la synthèse, d'utiliser des fenêtres du même type.

Le décodeur est donc esclave du codeur et applique fidèlement les types de fenêtre décidés par le codeur.

On comprendra alors qu'un inconvénient de l'art antérieur connu réside dans le fait que, pour assurer une transition du type de fenêtre qui est utilisé au cours du temps, il est nécessaire d'introduire une demi-fenêtre intercalaire afin d'assurer la reconstruction parfaite. Ainsi, les fenêtres d'analyse $h_{a1}$ et $h_{a2}$ précitées ne peuvent être rendues indépendantes l'une de l'autre sur leur support commun.

La présente invention vient améliorer la situation.

Elle propose à cet effet une transition entre fenêtres sans contrainte entre les fenêtres consécutives.

A cet effet, elle vise tout d'abord un procédé de codage d'un signal numérique, par transformée avec recouvrement utilisant des fenêtres de pondération, dans lequel deux blocs d'échantillons du signal, consécutifs et de même taille $2M$, sont pondérés respectivement par une première et une deuxième fenêtre d'analyse. Ces fenêtres comportant chacune un front montant et un front descendant, le front montant de la deuxième fenêtre est différent du front descendant de la première fenêtre retournée temporellement.

On comprendra qu'il s'agit là d'une caractéristique distinctive de l'art antérieur décrit précédemment et qui manifeste ainsi le fait que les première et deuxième fenêtres peuvent être choisies complètement indépendamment l'une de l'autre, par exemple selon un critère propre à des caractéristiques du signal déterminées sur chacun des deux blocs.

Ainsi, on prévoit au moins deux types de fenêtre de pondération notamment pour l'analyse au codage, et il est possible de changer de type de fenêtre de pondération pour coder un bloc courant dans lequel un événement particulier a été détecté par exemple. Cet événement particulier peut être typiquement un changement de comportement statistique du signal, ou encore l'apparition d'un phénomène particulier, tel qu'un saut important d'énergie dans le signal numérique que contient la trame courante.

On réitère ces étapes pour un bloc suivant, de sorte qu'il est possible, au sens de l'invention, de coder un bloc donné en utilisant une fenêtre de pondération d'un type donné et de coder un bloc qui suit immédiatement le bloc donné en utilisant directement ensuite un autre type de fenêtre de pondération, sans restriction, et en particulier sans restriction au sens de l'art antérieur imposant nécessairement une fenêtre intercalaire.

Les blocs précités peuvent, à titre d'exemple, correspondre à des trames de signal comme indiqué précédemment.

En s'offrant la possibilité de passer directement d'un type de fenêtre à un autre, sans transition, l'invention permet déjà de réaliser un codage avec des fenêtres adaptées à chacun des signaux couverts par ces fenêtres. On obtient ainsi un gain de codage meilleur sur chacun des segments de signal couverts par les fenêtres.

Par rapport à l'état antérieur, on obtiendra ainsi une qualité de codage améliorée de par l'adaptation précise des fenêtres aux propriétés du signal.

La présente invention vise de façon homologue un procédé de décodage d'un signal numérique, par transformée avec recouvrement utilisant des fenêtres de pondération, dans lequel deux blocs d'échantillons du signal, consécutifs et de même taille, sont pondérés respectivement par une première et une deuxième fenêtre de synthèse, lesquelles comportent chacune un front montant et un front descendant avec, en particulier, le front montant de la deuxième fenêtre différent du front descendant de la première fenêtre retournée temporellement.

Dans un mode de réalisation, les fenêtres d'analyse de l'un au moins des deux types précités de fenêtre d'analyse incluent au moins une portion de fin comportant des coefficients tous nuls. Au décodage, les fenêtres de synthèse comportent alors des zéros en début de fenêtre. Cette mise en oeuvre permet de réduire un retard de codage/décodage lié aux transformées appliquées.

L'invention trouve donc une application avantageuse dans les communications interactives pour lesquelles il est important que le retard soit le plus petit possible.

D'autres caractéristiques et avantages de l'invention apparaîtront à l'examen de la description détaillée ci-après et des dessins annexés sur lesquels, outre les figures 1 à 5 relatives à l'art antérieur et décrites ci-avant :

- la figure 6 illustre un changement de type de fenêtres, avec des première et deuxième fenêtres précitées de formes différentes au sens de l'invention,
- la figure 7 illustre des fenêtres d'analyse comportant $M_z$ coefficients nuls en leur terminaison, dans une réalisation avantageuse,
- la figure 8 illustre la réduction du retard de codage/décodage qu'implique une telle réalisation avantageuse,
- la figure 9 illustre un système de codage/décodage pour la mise en oeuvre de l'invention,
- la figure 10A illustre les étapes d'un procédé de codage au sens de l'invention,
- la figure 10B illustre les étapes d'un procédé de décodage, et
- la figure 11 illustre une forme de fenêtre de synthèse avantageuse (traits pointillés).

On décrit ci-après une réalisation de l'invention permettant de passer d'une fenêtre d'analyse à une autre sans précaution particulière et en particulier sans fenêtre de transition. Ainsi, les fenêtres d'analyse choisies au codage sont indépendantes l'une de l'autre, ce qui contribue à améliorer la qualité du codage.

Considérant une trame courante $T_2$, il est fait comme hypothèse ici qu'un choix particulier de fenêtre d'analyse a déjà été effectué au préalable pour une trame immédiatement précédente $T_1$. Pour la trame $T_2$, une autre fenêtre d'analyse est choisie afin de faciliter le codage dans le domaine fréquentiel des échantillons de la trame courante $T_2$. Un critère possible à titre d'exemple consiste en ce que la fenêtre $h_{a2}$ choisie pour la trame $T_2$ maximise le gain de codage dans le domaine transformé donné par :

$$G_{TC} = \frac{\dfrac{1}{M}\displaystyle\sum_{k=0}^{M-1}\sigma_k^2}{\left[\displaystyle\prod_{k=0}^{M-1}\sigma_k^2\right]^{1/M}},$$

où $\sigma_k^2$ représente une estimation de la variance des échantillons transformés $X_k$.

Un autre critère pourrait, en variante, être encore basé sur une minimisation de l'entropie des échantillons transformés, et s'exprimer par exemple sous la forme :

$$J_H = -\sum_{k=0}^{M-1} X_k^2 \log\left[X_k^2\right]$$

Il est possible d'envisager un critère plus complexe définissant un optimum entre la distorsion réalisée après codage/décodage, d'une part, et le débit requis avec ce codage, d'autre part. Ce critère plus complexe, à minimiser, peut par exemple s'écrire sous la forme :

$$J_{RD} = D(X) + \lambda R(X),$$

où :

$D(X)$      est une mesure de la distorsion effectuée sur les échantillons $X_k$ pour un débit choisi, et

$R(X)$      est ce débit choisi.

La détermination de la meilleure fenêtre d'analyse $h_{a2}$, conditionnée par le critère finalement retenu, est effectuée préférentiellement dans un ensemble restreint de combinaisons. En effet, une contrainte reste imposée : le type de filtre d'analyse utilisé (notamment le filtre prototype d'analyse correspondant à la fenêtre de pondération au codage) doit être connu par le décodeur et doit donc être transmis au décodeur.

Le choix de la fenêtre $h_{a2}$ peut donc être effectué parmi un dictionnaire de fenêtres d'analyse $\{h_0, h_1, h_2, \cdots, h_{Nb-1}\}$ où Nb représente le nombre de choix possibles. Il peut alors être prévu de coder l'indice de la forme de fenêtre choisie sur un nombre de bit entier supérieur ou égal à $\log_2(Nb)$ et transmettre ensuite cet indice codé au décodeur.

L'ensemble des fenêtres ainsi définies peut être appliqué pour $M$ échantillons, les fenêtres d'analyse utilisées $h_{a1}$ et/ou $h_{a2}$, de longueur $2M$, étant par exemple construites comme suit :

$$\begin{cases} h_{a1}(M+n) = h_i(n) & 0 \le n < M \\ h_{a2}(n) = h_j(M-1-n) & 0 \le n < M \end{cases},$$

pour les entiers $i$ et $j$ compris entre 0 et Nb-1.

Les fenêtres $h_i$ et $h_j$ sont construites par exemple à l'aide de :

- fenêtres KBD (traits pointillés de la figure 3), paramétrées avec différentes valeurs de coefficient de forme (noté souvent $\alpha$),
- de fenêtres sinusoïdales,
- de fenêtres à faible recouvrement telles que décrites dans la norme AAC - "low delay",
- ou encore de fenêtres optimisées selon différents critères, par exemple selon un critère de gain de codage comme décrit dans :

  "Bancs de Filtres et quantification vectorielle sur réseau - Etude conjointe pour la compression d'images", P. Onno, thèse de l'Université de Rennes 1 (1996).

Il est possible de restreindre le choix de fenêtre à une famille de fenêtres paramétrables (telles que les fenêtres KBD). On peut transmettre dans ce cas l'ensemble des paramètres sous une forme codé (ce qui se restreint dans le cas de fenêtres KBD à une valeur quantifiée et codée du facteur de forme $\alpha$).

Au décodage, sur réception du type de fenêtre d'analyse $h_{a2}$ utilisé au codage, et après décodage des échantillons fréquentiels $X_k$, puis application d'une transformée DCT inverse, les fenêtres de synthèse doivent être appliquées afin de reconstituer les échantillons temporels. Afin de limiter les dégradations sur le signal reconstruit, on choisit préférentiellement des fenêtres de synthèse assurant une reconstruction "*parfaite*" au niveau de la transformée. En l'absence de quantification, cette transformée inverse succédant à la transformation directe n'entraîne pas de distorsion. On retiendra toutefois ici comme critère une erreur de reconstruction de la transformée restant négligeable, perceptiblement, par rapport à un seuil de perception prédéterminé.

Pour reconstituer la partie commune entre la trame $T_1$ et $T_2$, sans distorsion du fait des transformées, les portions de fenêtre de synthèse affectant cette partie commune ($h_{s2}(n)$ et $h_{s1}(n+M)$, avec $0 \le n < M$) devront être liées aux fenêtre d'analyse sur cette même partie commune ($h_{a1}(n+M)$ et $h_{a2}(n)$). La relation suivante décrit les conditions qui sont à respecter pour assurer une reconstruction parfaite dans cette partie commune :

$$\begin{cases} h_{a1}(n+M) \cdot h_{s1}(n+M) & + & h_{a2}(n) \cdot h_{s2}(n) & = & 1 \\ h_{a1}(2M-1-n) \cdot h_{s1}(n+M) & - & h_{a2}(M-1-n) \cdot h_{s2}(n) & = & 0 \end{cases}, \text{avec } n = 0 \ldots M-1$$

En résolvant ce système pour les fenêtres $h_{s2}(n)$ et $h_{s1}(n+M)$, on trouve, sous la condition $D(n) = h_{a1}(n+M) \cdot h_{a2}(M-1-n) + h_{a2}(n) \cdot h_{a1}(2M-1-n) \ne 0$ :

$$\begin{cases} h_{s1}(n+M) & = & \dfrac{h_{a2}(M-1-n)}{D(n)} \\ h_{s2}(n) & = & \dfrac{h_{a1}(2M-1-n)}{D(n)} \end{cases}$$

Ainsi par ce choix de fenêtre de synthèse $h_{s1}(n+M)$ et $h_{s2}(n)$, on assure la reconstruction "*parfaite*".

Ainsi, à la synthèse :

- la fenêtre $h_{s1}(n+M)$ est appliquée pour mener la transformée MDCT inverse de la seconde portion de la trame $T_1$, et
- la fenêtre $h_{s2}(n)$ est appliquée pour mener la transformée MDCT inverse de la première moitié de la trame $T_2$.

Le résultat des deux pondérations est sommé terme à terme pour obtenir les échantillons décodés.

On observe que les fenêtres $h_{s1}(n+M)$ et $h_{s2}(n)$ sont construites simplement par retournement temporel des fenêtres d'analyse puis par application d'un facteur correctif noté $D'(n)=1/D(n)$. Ainsi, la fenêtre $h_{s1}(n+M)$ est construite par inversion des indices temporels de la fenêtre d'analyse $h_{a2}(n)$ et, réciproquement, la fenêtre $h_{s2}(n)$ est construite en inversant les indices temporels de la fenêtre d'analyse $h_{a1}(n+M)$. Le facteur correctif (correspondant à un gain à appliquer sur chacune des fenêtres) est défini par $D'(n)=1/D(n)$. On entend ici par "retournement temporel" ou "inversion d'indice temporel" le fait de définir la forme d'une fenêtre en fonction de l'opposé (-n) de l'indice courant de temps $n$.

On pourra appliquer une fenêtre de type $h_{a2}(M\text{-}1\text{-}n)$ à la seconde portion de la trame $T_1$ et une fenêtre de type $h_{a1}(2M\text{-}1\text{-}n)$ à la première moitié de la trame $T_2$. Le résultat de cette pondération est alors ensuite sommé, puis finalement pondéré par la pondération $D'(n)=1/D(n)$.

Il apparaît une propriété remarquable selon laquelle la pondération $1/D(n)$ est un simple facteur de gain qui vient corriger une distorsion d'amplitude. Ainsi, l'opération de reconstruction mettant en jeu les fenêtres $h_{a2}(M\text{-}1\text{-}n)$ et $h_{a1}(2M\text{-}1\text{-}n)$ donne un signal reconstruit dénué de composantes de repliement temporel. Le gain $D'(n)$ peut donc être considéré comme un simple terme correctif d'amplitude.

En observant l'expression du gain $D(n)$, il apparaît aussi la propriété remarquable suivante: $D(n)=D(M\text{-}1\text{-}n)$, ce qui se traduit par le fait que seuls $M/2$ coefficients de gain $D(n)$ ont besoin d'être calculés et/ou stockés. Cette propriété se retrouve aussi pour le gain $D'(n)$ à la synthèse.

Il est donc possible, dans une première réalisation, de stocker au décodage toutes les fenêtres de synthèse combinant l'ensemble des possibilités de transition entre fenêtres d'analyse, soit donc le résultat de :

$$\begin{cases} h_{s1,i,j}(n+M) & = & \dfrac{h_i(M-1-n)}{D_{i,j}(n)} \\[2em] h_{s2,i,j}(n) & = & \dfrac{h_j(2M-1-n)}{D_{i,j}(n)} \end{cases}$$

avec $D_{i,j}(n)=h_i(n+M)\cdot h_j(M\text{-}1\text{-}n)+h_j(n)\cdot h_i(2M\text{-}1\text{-}n)$

Cette mise en oeuvre requiert alors une taille mémoire substantielle.

Dans une deuxième réalisation, il est possible de stocker les fenêtres d'analyse auprès du décodeur, telles quelles ou avec indice temporel retourné. On calcule alors le gain $D_{i,j}(n)$, $0 \leq n < M/2$, puis on applique pour la reconstruction les fenêtres d'analyse retournées temporellement. Enfin, on pondère le résultat obtenu après addition par le gain $D'_{i,j}(n)=1/D_{i,j}(n)$.

Pour certaines combinaisons particulières de couples $(i,j)$ il peut s'avérer que le gain $D_{i,j}(n)=1$ pour un ensemble d'échantillons $n$. Dans ce cas particulier, on pourra s'affranchir de la pondération finale.

Il est possible d'étendre cette simplification au cas où le gain $D_{i,j}(n)$ est très proche de 1, en particulier dans le cas où la distorsion d'amplitude à corriger reste inférieure à 0,1 dB par exemple, ce qui peut, en pratique, se traduire par une différence en valeur absolue entre le gain $D_{i,j}(n)$ et 1 inférieure à un seuil choisi, par exemple 0,01.

Les fonctions de gain $D_{i,j}(n)$ et leurs fonctions inverses $D'_{i,j}(n)$ peuvent être calculées au moment de leur utilisation ou être stockées initialement pour être utilisées au besoin, selon l'une ou l'autre des réalisations précitées.

Il convient de noter encore que les fonctions de gain $D_{i,j}(n)$ ne requièrent que $M/2$ éléments de stockage pour chaque couple $(i,j)$. De plus, toutes les combinaisons ne sont pas à stocker car on peut observer que $D_{i,j}(n)=D_{j,i}(n)$ quel que soit le couple $(i,j)$.

On décrit ci-après une réalisation avantageuse appliquée pour viser une réduction de retard.

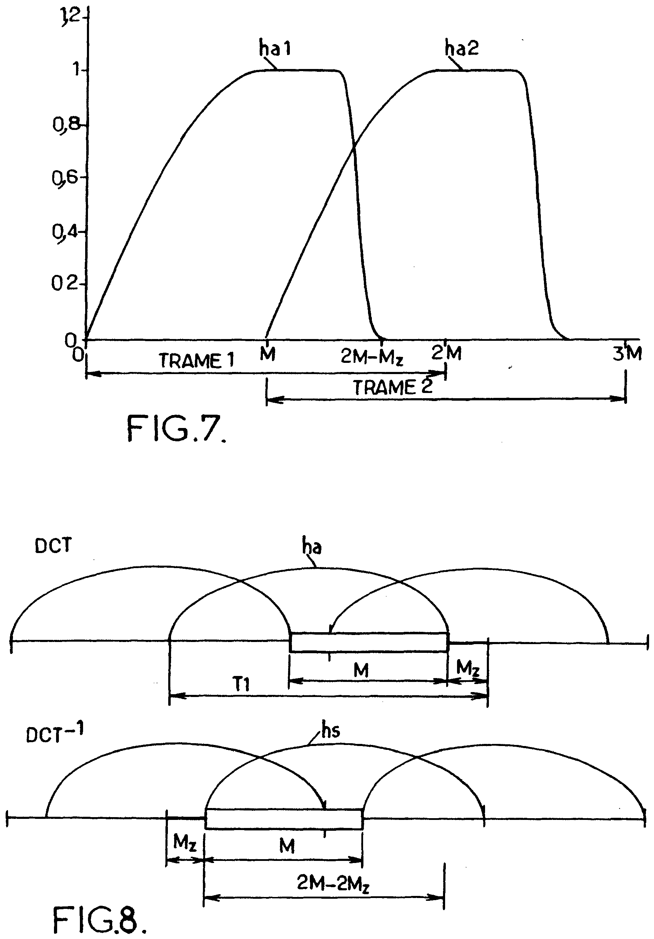

Dans cette réalisation particulière, on impose des portions entières de fenêtres de pondération (valeurs contiguës de coefficients de pondération) à zéro dans la fenêtre d'analyse $h_{a1}(n+M)$. Plus particulièrement, la fenêtre $h_{a1}(n+M)$ contiendra une portion de $M_z$ zéros dans l'intervalle $2M\text{-}M_z \leq n < 2M$ avec $M_z < M/2$, comme illustré sur la figure 7 représentant deux fenêtres typiques au sens de cette réalisation.

Conformément au premier mode de réalisation, et par opposition à l'état de l'art, les fenêtres $h_{a1}$ et $h_{a2}$ sont indépendantes l'une de l'autre dans l'intervalle compris entre $M$ et $2M$. La seule condition quant au choix des fenêtres $h_{a1}$ et $h_{a2}$ est que la valeur $D(n)$ ne soit pas nulle pour $0 \leq n < M$. Cette construction particulière de la fenêtre $h_{a1}(n+M)$ permet d'assurer que la fenêtre de synthèse $h_{s2}(n)$ puisse contenir des zéros entre 0 et $M_z\text{-}1$. Ce résultat est une conséquence de la relation :

$$h_{s2}(n) = \frac{h_{a1}(2M-1-n)}{D(n)}$$

On comprendra alors que, pour une même fenêtre asymétrique $h_{a1}$ utilisée à l'analyse, le respect de la condition sur le gain $D(n)$ donnée par :

$$D(n) = h_{a1}(n+M) \cdot h_{a1}(M-1-n) + h_{a1}(n) \cdot h_{a1}(2M-1-n) \neq 0$$

impose que le nombre $M_z$ de coefficients nuls vérifie $M_z < M/2$.

Cette mise à zéro d'une portion de la fenêtre d'analyse $h_{a1}(n+M)$ a une influence avantageuse sur le retard de reconstruction des échantillons, comme on va le voir ci-après.

En référence à la figure 8, la trame T1 (ayant une taille de $2M$ échantillons) est traitée par application de la fenêtre $h_{a1}$. Le résultat de cette pondération est traité par la transformée DCT. Du fait que la fenêtre $h_{a1}$ contient des zéros, la trame T1 peut simplement être codée et émise au bout de $2M\text{-}M_z$ échantillons. Il n'est effectivement pas nécessaire d'attendre la fin des $2M$ échantillons de la trame T1 pour envoyer la trame codée correspondante, mais simplement d'attendre le traitement de ses $2M\text{-}M_z$ premiers échantillons. On gagne ainsi une avance correspondant au temps de traitement de $M_z$ échantillons de fin de la trame T1 par rapport à l'utilisation d'une fenêtre classique au sens de l'état de l'art.

A la synthèse, la fenêtre de synthèse homologue $h_{s1}$ comporte $M_z$ premiers coefficients à zéro (non plus en fin mais en début de fenêtre), ce qui permet, de la même façon, de reconstruire les échantillons décodés avec une avance de $M_z$ échantillons. En effet, les $M_z$ échantillons correspondant au début de la fenêtre de synthèse, sont, puisque l'influence du début de fenêtre $h_{s1}$ est nulle, reconstitués en réalité par la fenêtre précédente $h_{s0}$ de la figure 8. Ainsi, il n'est pas nécessaire d'attendre, là encore, les échantillons suivants issus de la DCT inverse pour reconstruire efficacement les $M_z$ échantillons décodés, ce qui permet une avance de $M_z$ échantillons encore à la synthèse.

Ainsi, imposer $M_z$ coefficients successifs nuls en fin de fenêtre d'analyse permet de réduire le retard dû aux transformées directe MDCT puis inverse MDCT$^{-1}$ de $2M_z$ échantillons. Le retard total est donc de $2M\text{-}2M_z$ échantillons. Cette réduction de retard est réalisée avec des fenêtres de longueur effective de $2M\text{-}M_z$, alors qu'une solution au sens de l'état de l'art aurait préconisé classiquement des fenêtres d'analyse et de synthèse identiques (au retournement temporel près) et de longueur effective de taille $2M\text{-}2M_z$ pour une même réduction de retard. Ainsi, grâce à cette mise en oeuvre, des fenêtres plus longues peuvent être utilisées et, de ce fait, les réponses fréquentielles obtenues sont plus avantageuses et le codage est de meilleure qualité.

Alors que l'état de l'art impose une valeur de 1 aux coefficients centraux des fenêtres de pondération si des zéros sont introduits en fin ou en début de fenêtre, ce qui pénalise les propriétés de codage avec ce type de fenêtre (figure 5), la réalisation au sens de l'invention ne présente pas cet inconvénient. De plus, comme il n'y a pas de contrainte sur le choix des fenêtres d'analyse successives, des propriétés satisfaisantes de codage pourront être obtenues.

Ainsi, une transformée d'analyse, plus adaptée que d'autres au signal à coder, pourra être sélectionnée parmi des filtres d'analyse contenant des zéros en leur terminaison (par exemple dans un dictionnaire de filtres prototypes), entraînant alors un codage/décodage le mieux adapté au signal et à retard réduit de $2M_z$ par rapport à l'état de la technique.

On décrit ci-après une réalisation particulière dans laquelle, au codage, on choisit une paire de fenêtres $h_{a1}$ et $h_{a2}$ permettant d'éviter une correction $D'(n)$ à la synthèse. Il s'agit de modifier sensiblement ici une fenêtre initiale d'analyse pour garantir une fonction de pondération $D'(n)$ constante et égale à un à la synthèse.

À cet effet, on détermine deux portions de fenêtres d'analyse à partir d'une fenêtre $h(n)$ définie sur l'intervalle $0 \leq n < 2M$ et satisfaisant pour tout indice $n$ une expression de facteur de normalisation $\Delta(n)$ non nul :

$$\Delta(n) = \sqrt{h(n)h(2M-1-n) + h(n+M)h(M-1-n)} \neq 0,$$

avec $0 \leq n < M$ On construit alors, pour $0 \leq n < M$ :

$$h_{a1}(n+M) = h(n+M)/\Delta(n) \quad \text{et} \quad h_{a2}(n) = h(n)/\Delta(n)$$

De cette manière, le gain $D'(n)$ au décodage est de 1 pour tout $n$ et la reconstruction à la synthèse s'effectue par pondération par les mêmes fenêtres d'analyse $h_{a1}$ et $h_{a2}$ simplement retournées temporellement, cette pondération étant suivie d'une simple addition.

Un exemple de fenêtre $h(n)$ pour $0 \leq n < 2M$, contenant $M_z$ zéros, et permettant de limiter le retard de $2M_z$ échantillons est :

$$h(n) = \sin\left[\frac{\pi}{2M - M_z}\left(n + \frac{1}{2}\right)\right]$$

pour $0 \leq n < 2M - M_z$ et $h(n) = 0$ sinon (c'est-à-dire pour $2M - M_z \leq n < 2M$).

On indique aussi qu'un autre choix possible, permettant une sélectivité fréquentielle variable selon un paramètre de forme $\alpha$, consiste en une fenêtre de Kaiser Bessel définie par :

$$h(n, \alpha) = \frac{I_0\left[\pi\alpha\sqrt{1 - \left(\frac{n - M'}{M'}\right)^2}\right]}{I_0[\pi\alpha]},$$

où $M' = M - M_z/2$, pour $0 \leq n < M - M_z/2$ avec $h(2M - M_z - 1 - n, \alpha) = h(n, \alpha)$ pour $0 \leq n < M - M_z/2$ et $h(n, \alpha) = 0$ sinon (pour $n$ tel que $2M - M_z \leq n < 2M$).

On relèvera qu'il est possible de déterminer ainsi, à partir d'une fenêtre d'initialisation choisie $h(n)$, les fenêtres d'analyse $h_{a1}$ et $h_{a2}$ et, de là, les fenêtres de synthèse par simple retournement temporel.

Il est possible aussi pour la mise en oeuvre d'un décodage au sens de l'invention de déterminer les deux portions de fenêtre de synthèse $h_{s1}$ et $h_{s2}$ directement à partir d'une fenêtre d'initialisation $h(n)$ contenant $M_z$ coefficients nuls en son début.

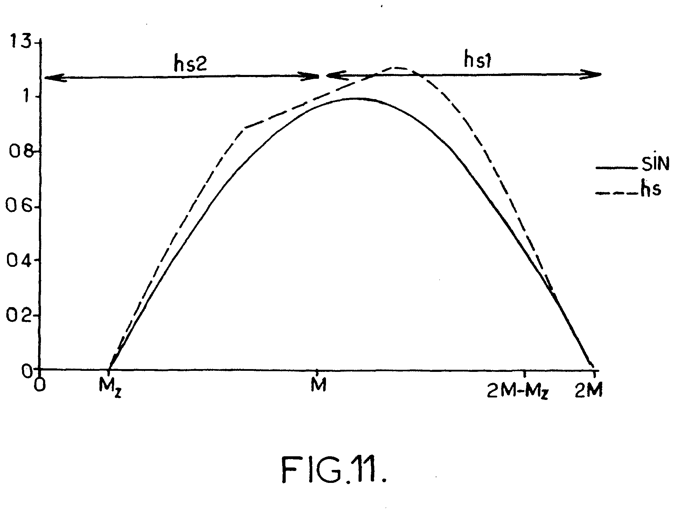

En se basant sur une fenêtre d'initialisation sinusoïdale (courbe en trait plein de la figure 11) telle que par exemple :

$$h(n) = 0 \text{ pour } 0 \leq n < M_z \text{ et } h(n + M_z) = \sin\left[\frac{\pi}{2M - M_z}\left(n + \frac{1}{2}\right)\right]$$

pour $0 \leq n < 2M - M_z$, les portions de fenêtres de synthèse $h_{s1}$ et $h_{s2}$ se déduisent alors directement comme suit :

$$h_{s1}(n + M) = h(n + M) / \Delta(n) \text{ et } h_{s2}(n) = h(n) / \Delta(n) \quad 0 \leq n < M$$

Avec, comme précédemment :

$$\Delta(n) = \sqrt{h(n)h(2M - 1 - n) + h(n + M)h(M - 1 - n)} \neq 0,$$

avec $0 \leq n \leq M$.

On a représenté en traits pointillés sur la figure 11 l'allure d'une fenêtre de synthèse globale $hs_i$ résultant des deux portions de fenêtres $h_{s1}$ et $h_{s2}$ obtenues à partir de la fenêtre d'initialisation $h(n)$ d'expression sinusoïdale illustrée en trait plein, selon cette réalisation.

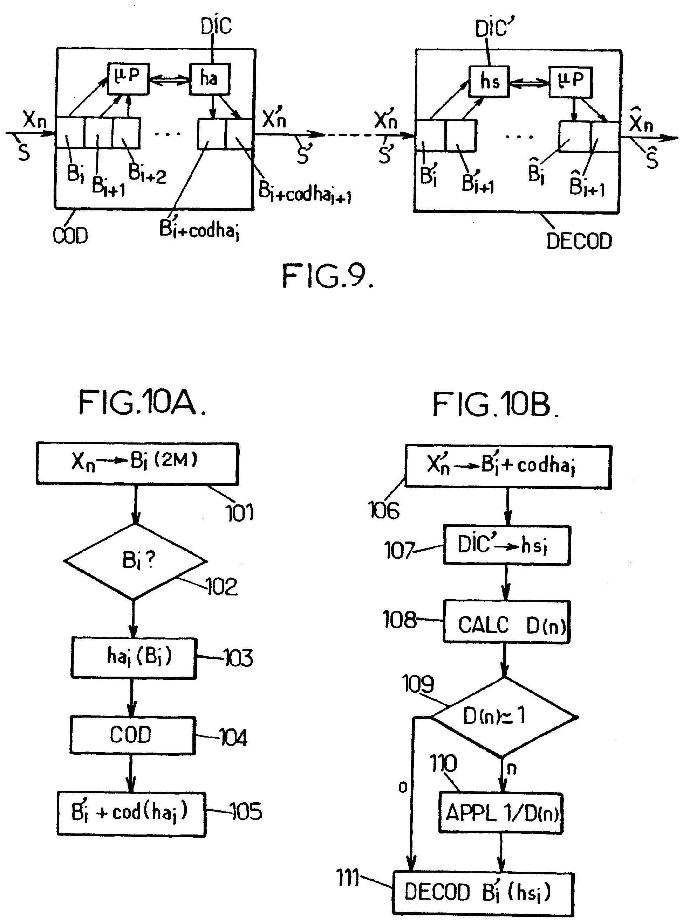

La présente invention vise aussi un système de codage/décodage tel qu'illustré sur la figure 9, dans un mode de réalisation décrit ici à titre d'exemple. Un codeur COD reçoit un signal numérique S à coder et comportant une succession d'échantillons $X_n$. Cette succession d'échantillons est traitée par blocs successifs $B_i$, $B_{i+1}$, etc., de $2M$ échantillons chacun (étape 101 de la figure 10A). Des moyens de traitement $\mu P$ du codeur analysent le contenu des blocs $B_i$ un à un (étape 102 de la figure 10A) par exemple selon un critère donné (entropie, gain de codage, distorsion/débit, ou autres) et en déduisent la fenêtre d'analyse $ha_i$ d'un dictionnaire DIC du codeur, laquelle fenêtre est la plus adaptée à ce bloc $B_i$ selon le critère précité. La fenêtre de pondération d'analyse $ha_i$ ainsi choisie est appliquée au bloc courant $B_i$ (étape 103 de la figure 10A), lequel est ensuite codé (étape 104).

Un bloc $B'_i$ résultant de ce codage est ensuite envoyé au décodeur DECOD de la figure 9 dans le signal codé S', avec un code dans le dictionnaire DIC de la fenêtre d'analyse sélectionnée $ha_i$ (étape 105 de la figure 10A). Bien entendu, le décodeur DECOD a reçu avec un bloc précédent $B'_{i-1}$ un code du dictionnaire DIC désignant une fenêtre d'analyse utilisée précédemment $ha_{i-1}$. Le décodeur DECOD, sur réception du signal codé S' comportant une succession de blocs codés B'$_i$, B'$_{i+1}$, etc. et des codes de fenêtres $ha_i$ ayant servi pour l'analyse dans le codage des blocs B$_i$ (étape 106 de la figure 10B), détermine à partir de son propre dictionnaire DIC' (homologue du dictionnaire DIC du codeur) les demi-fenêtres hs$_{i-1}(n+M)$ et hs$_i(n)$ devant servir pour la synthèse (étape 107).

Dans l'exemple décrit, les moyens de traitement μP du décodeur DECOD estiment le facteur correctif $D(n)$ pour chaque indice temporel $n$ en lien avec la fenêtre $ha_{i-1}$ utilisée précédemment à l'analyse (étape 108). Si le facteur correctif est proche de 1 (à un seuil de 0,1dB près par exemple, mesuré en valeur absolue), au test 109 de la figure 10B. le décodeur n'applique pas de correction (flèche o en sortie du test 109). Sinon (flèche n). les moyens de traitement μP appliquent la correction $D'(n)=1/D(n)$ décrite précédemment (étape 110). Le traitement se poursuit par le décodage proprement dit des blocs B'$_i$ pondérés avec les fenêtres hs$_i$ (corrigées le cas échéant par le facteur D') à l'étape 111, pour délivrer des blocs décodés $\hat{B}_i$, $\hat{B}_{i+1}$, etc. du signal décodé S dont les échantillons $\hat{X}_n$ (sans perte) valent les échantillons initiaux X$_n$ puisque la reconstruction parfaite est assurée.

La présente invention vise aussi un codeur COD du type représenté sur la figure 9, ainsi qu'un programme informatique destiné à être stocké en mémoire d'un tel codeur et dont un algorithme peut être représenté par l'organigramme de la figure 10A. Elle vise aussi un décodeur DECOD du type représenté sur la figure 9, ainsi qu'un programme informatique destiné à être stocké en mémoire d'un tel décodeur et dont un algorithme peut être représenté par l'organigramme de la figure 10B.

**Revendications**

1. Procédé de codage d'un signal numérique, par transformée avec recouvrement utilisant des fenêtres de pondération, dans lequel deux blocs d'échantillons du signal, consécutifs et de même taille (2$M$), sont pondérés respectivement par une première ($h_{a1}$) et une deuxième fenêtre ($h_{a2}$) d'analyse, et lesdites première et deuxième fenêtres comportant chacune un front montant et un front descendant, le front montant de la deuxième fenêtre ($h_{a2}$) est différent du front descendant de la première fenêtre ($h_{a1}$) retournée temporellement

2. Procédé de codage selon la revendication 1, dans lequel lesdites première et deuxième fenêtres sont choisies indépendamment l'une de l'autre, selon un critère propre à des caractéristiques du signal déterminées sur chacun des deux blocs.

3. Procédé de codage selon la revendication 2, dans lequel le critère de choix d'une fenêtre de pondération est un élément ou une combinaison d'éléments parmi :

    - une maximisation ($G_{TC}$) du gain de codage,
    - une minimisation ($J_H$) d'entropie des échantillons transformés,
    - une optimisation ($J_{RD}$) entre une distorsion due au codage/décodage et un débit requis par ledit codage.

4. Procédé de codage selon l'une des revendications 1 à 3, dans lequel chaque fenêtre de pondération choisie pour le codage d'un bloc est sélectionnée dans un dictionnaire de fenêtres de pondération possibles, un indice de fenêtre étant associé à chaque fenêtre dudit dictionnaire,
et dans lequel l'indice de la fenêtre sélectionnée est transmis vers un décodeur, pour utiliser au décodage une fenêtre homologue de la fenêtre sélectionnée au codage.

5. Procédé de codage selon l'une des revendications précédentes, dans lequel au moins une partie des fenêtres d'analyse comporte un nombre choisi ($M_z$) de coefficients de pondération successifs de valeur nulle en fin de fenêtre, et ledit nombre choisi de coefficients nuls ($M_z$) est inférieur à un quart du nombre total de coefficients (2$M$) d'une fenêtre.

6. Procédé de décodage d'un signal numérique, par transformée avec recouvrement utilisant des fenêtres de pondération,
dans lequel deux blocs d'échantillons du signal, consécutifs et de même taille (2$M$), sont pondérés respectivement par une première ($h_{s1}$) et une deuxième fenêtre ($h_{s2}$) de synthèse, dans lequel, lesdites première et deuxième fenêtres comportant chacune un front montant et un front descendant, le front montant de la deuxième fenêtre ($h_{s2}$) est différent du front descendant de la première fenêtre ($h_{s1}$) retournée temporellement,
et dans lequel on reçoit d'un codeur des informations (cod($ha_i$)) sur des fenêtres d'analyse utilisées successivement au codage,
et lesdites première et deuxième fenêtres de synthèse (h$_{s1}$, h$_{s2}$) se déduisent de première et deuxième fenêtres

d'analyse ($h_{a1}$, $h_{a2}$) utilisées successivement au codage,
la première et respectivement la deuxième fenêtre de synthèse se déduisant de la deuxième et respectivement de la première fenêtre d'analyse par inversion de positions temporelles de coefficients de pondération de la deuxième et respectivement de la première fenêtre d'analyse, et par application d'un facteur correctif ($1/D(n)$) à chaque coefficient de pondération de la deuxième et respectivement de la première fenêtre d'analyse.

**7.** Procédé de décodage selon la revendication 6, dans lequel la première fenêtre de synthèse notée $h_{s1}$ et la deuxième fenêtre de synthèse notée $h_{s2}$ se déduisent des première et deuxième fenêtres d'analyse respectivement notées $h_{a1}$ et $h_{a2}$ par des relations du type :

$$\begin{cases} h_{s1}(n+M) = \dfrac{h_{a2}(M-1-n)}{D(n)} \\[2em] h_{s2}(n) = \dfrac{h_{a1}(2M-1-n)}{D(n)} \end{cases}$$

où :

- le nombre $M$ est tel qu'un bloc d'échantillons comporte $2M$ échantillons,
- $n$ est un indice de position temporelle compris entre 0 et $M$-1,
- la notation $h(n)$ désigne le coefficient de pondération de la fenêtre $h$ et de position temporelle d'indice $n$,
- la notation $-n$ désigne l'opposé de l'indice $n$, manifestant ladite inversion de positions temporelles,
- et $D(n)$ désigne ledit facteur correctif à appliquer à un coefficient de position temporelle $n$, ce facteur étant non nul pour $n$ compris entre 0 et $M$-1 et donné par

$$D(n) = h_{a1}(n+M) \cdot h_{a2}(M-1-n) + h_{a2}(n) \cdot h_{a1}(2M-1-n).$$

**8.** Procédé de décodage selon l'une des revendications 6 et 7, dans lequel les informations sur les fenêtres d'analyse sont des indices d'un dictionnaire (DIC) de fenêtres utilisé au codage, et dans lequel on prévoit, au décodage, un dictionnaire homologue (DIC') comportant des fenêtres de synthèse homologues des fenêtres d'analyse utilisées au codage et pré-corrigées par ledit facteur correctif ($1/D(n)$), chaque fenêtre du dictionnaire homologue ayant un indice de dictionnaire déterminable à partir dudit indice de fenêtre d'analyse transmis au décodeur.

**9.** Procédé de décodage selon l'une des revendications 6 et 7, dans lequel les informations sur les fenêtres d'analyse sont des indices d'un dictionnaire (DIC) de fenêtres utilisé au codage, et dans lequel on prévoit, au décodage, un même dictionnaire comportant des fenêtres respectives issues de filtres prototypes d'un banc de filtres d'analyse au codage, et dans lequel, au décodage, on applique :

- une inversion de positions temporelles,
- et ledit facteur correctif ($1/D(n)$) aux coefficients d'une fenêtre du dictionnaire si l'estimation du facteur correctif pour un coefficient est sensiblement différent de 1 à un seuil prédéterminé près.

**10.** Procédé de décodage selon l'une des revendications 6 à 9, dans lequel au moins une partie des fenêtres de synthèse comporte un nombre choisi de coefficients de pondération successifs de valeur nulle en début de fenêtre, et ledit nombre choisi de coefficients nuls ($M_z$) est inférieur à un quart du nombre total de coefficients ($2M$) d'une fenêtre.

**11.** Procédé de décodage selon la revendication 10, dans lequel on prévoit une opération de synthèse en utilisant une fenêtre de pondération correspondant à deux portions de fenêtres d'analyse retournées temporellement, l'opération de pondération par la fenêtre de synthèse se poursuivant par une addition,
lesdites portions de fenêtres d'analyse, notées $h_{a1}$ et $h_{a2}$ s'exprimant en fonction d'une fenêtre d'initialisation notée $h(n)$ selon des expressions du type :

$h_{a1}(n+M)=h(n+M)/\Delta(n)$ et $h_{a2}(n)=h(n)/\Delta(n)$, où le nombre $M$ est tel qu'un bloc comporte $2M$ échantillons et $n$ est un indice temporel tel que $0 \leq n < M$, $\Delta(n)$ étant un facteur de normalisation non nul défini pour tout indice $n$ tel que $0 \leq n < M$.

**12.** Procédé de décodage selon l'une des revendications 10 et 11, dans lequel on détermine deux portions de fenêtre de synthèse notées $h_{s1}$ et $h_{s2}$ directement à partir d'une fenêtre d'initialisation notée $h(n)$ contenant un nombre choisi ($M_z$) de coefficients nuls en son début, selon des expressions du type :

$$h_{s1}(n+M) = h(n+M)/\Delta(n) \text{ et } h_{s2}(n) = h(n)/\Delta(n),\ 0 \le n < M,$$

où le nombre $M$ est tel qu'un bloc comporte $2M$ échantillons et $n$ est un indice temporel tel que $0 < n < M$,
$\Delta(n)$ étant un facteur de normalisation non nul défini pour tout indice $n$ tel que $0 \le n < M$.

**13.** Procédé selon l'une des revendications 11 et 12, dans lequel ledit facteur de normalisation est défini par une expression du type :

$$\Delta(n) = \sqrt{h(n)h(2M-1-n) + h(n+M)h(M-1-n)}$$

**14.** Procédé selon l'une des revendications 12 et 13, **caractérisé en ce que** la fenêtre d'initialisation $h(n)$ s'exprime par :

$$h(n+M_z) = \sin\left[\frac{p}{2M-M_z}\left(n+\frac{1}{2}\right)\right]$$

$h(n)=0$ pour $0 \le n < M_z$ et $\qquad$ pour $0 \le n < 2M - M_z$, où $M_z$ est ledit nombre choisi de coefficients nuls en début de fenêtre d'initialisation.

**15.** Dispositif de codage d'un signal numérique, par transformée avec recouvrement utilisant des fenêtres de pondération, **caractérisé en ce qu'**il est configuré pour la mise en oeuvre du procédé selon l'une des revendications 1 à 5.

**16.** Dispositif de décodage d'un signal numérique, par transformée avec recouvrement utilisant des fenêtres de pondération, **caractérisé en ce qu'**il est configuré pour la mise en oeuvre du procédé selon l'une des revendications 6 à 14.

**17.** Programme informatique destiné à être stocké en mémoire d'un dispositif de codage ou de décodage, **caractérisé en ce qu'**il comporte des instructions pour la mise en oeuvre du procédé de codage selon l'une des revendications 1 à 5 ou du procédé de décodage selon l'une des revendications 6 à 14, lorsque les instructions sont exécutées par un processeur du dispositif.

**Patentansprüche**

**1.** Verfahren zur Codierung eines digitalen Signals durch Transformation mit Überlagerung unter Verwendung von Gewichtungsfenstern,
wobei zwei Tastprobenblöcke des Signals, aufeinanderfolgend und von gleicher Größe (2M), von einem ersten ($h_{a1}$) bzw. einem zweiten Analysefenster ($h_{a2}$) gewichtet werden, und die ersten und zweiten Fenster je eine ansteigende und eine abfallende Flanke aufweisen, wobei die ansteigende Flanke des zweiten Fensters ($h_{a2}$) sich von der abfallenden Flanke des zeitlich umgekehrten ersten Fensters ($h_{a1}$) unterscheidet.

**2.** Codierverfahren nach Anspruch 1, wobei die ersten und zweiten Fenster unabhängig voneinander gemäß einem Kriterium gewählt werden, das Merkmalen des Signals eigen ist, die in jedem der zwei Blöcke bestimmt werden.

**3.** Codierverfahren nach Anspruch 2, wobei das Wahlkriterium eines Gewichtungsfensters ein Element oder eine Kombination von Elementen ist von:

- einer Maximierung ($G_{TC}$) des Codiergewinns,
- einer Entropie-Minimierung ($J_H$) der transformierten Tastproben,
- einer Optimierung ($J_{RD}$) zwischen einer Verzerrung aufgrund der Codierung/Decodierung und einem von der Codierung geforderten Durchsatz.

**4.** Codierverfahren nach einem der Ansprüche 1 bis 3, wobei jedes für die Codierung eines Blocks gewählte Gewichtungsfenster aus einem Verzeichnis möglicher Gewichtungsfenster ausgewählt wird, wobei jedem Fenster des Verzeichnisses ein Fensterindex zugeordnet ist,
und wobei der Index des ausgewählten Fensters an einen Decodierer übertragen wird, um bei der Decodierung ein Fenster entsprechend dem bei der Codierung ausgewählten Fenster zu verwenden.

5. Codierverfahren nach einem der vorhergehenden Ansprüche, wobei mindestens ein Teil der Analysefenster eine gewählte Anzahl ($M_z$) von aufeinanderfolgenden Gewichtungskoeffizienten des Werts Null am Fensterende aufweist, und die gewählte Anzahl von Koeffizienten Null ($M_z$) niedriger als ein Viertel der Gesamtanzahl von Koeffizienten (2M) eines Fensters ist.

6. Verfahren zur Decodierung eines digitalen Signals durch Transformation mit Überlagerung unter Verwendung von Gewichtungsfenstern,
wobei zwei Tastprobenblöcke des Signals, aufeinanderfolgend und von gleicher Größe (2M), von einem ersten ($h_{s1}$) bzw. zweiten Synthesefenster ($h_{s2}$) gewichtet werden, wobei, da die ersten und zweiten Fenster je eine ansteigende Flanke und eine abfallende Flanke aufweisen, die ansteigende Flanke des zweiten Fensters ($h_{s2}$) sich von der abfallenden Flanke des zeitlich umgekehrten ersten Fensters ($h_{s1}$) unterscheidet,
und wobei von einem Codierer Informationen ($cod(ha_i)$) über Analysefenster erhalten werden, die nacheinander bei der Codierung verwendet werden, und die ersten und zweiten Synthesefenster ($h_{s1}, h_{s2}$) sich von ersten und zweiten Analysefenstern ($h_{a1}, h_{a2}$) ableiten, die nacheinander bei der Codierung verwendet werden,
wobei das erste bzw. zweite Synthesefenster sich vom zweiten bzw. ersten Analysefenster durch Invertierung zeitlicher Positionen von Gewichtskoeffizienten des zweiten bzw. ersten Analysefensters und durch Anwendung eines Korrekturfaktors ($1/D(n)$) an jeden Gewichtungskoeffizienten des zweiten bzw. ersten Analysefensters ableiten.

7. Decodierverfahren nach Anspruch 6, wobei das mit $h_{s1}$ bezeichnete erste Synthesefenster und das mit $h_{s2}$ bezeich- nete zweite Synthesefenster sich vom mit $h_{a1}$ und $h_{a2}$ bezeichneten ersten bzw. zweiten Analysefenster durch Beziehungen der folgenden Art ableiten:

$$\begin{cases} h_{s1}(n+M) = \dfrac{h_{a2}(M-1-n)}{D(n)} \\ h_{s2}(n) = \dfrac{h_{a1}(2M-1-n)}{D(n)} \end{cases}$$

wobei:

- die Anzahl M so ist, dass ein Tastprobenblock 2M Tastproben aufweist,
- n ein Index zeitlicher Position zwischen 0 und M-1 ist,
- die Schreibweise h(n) den Gewichtungskoeffizienten des Fensters h und einer zeitlichen Position mit dem Index n bezeichnet,
- die Schreibweise -n das Gegenteil des Index n bezeichnet, das die Invertierung zeitlicher Positionen ausdrückt,
- und D(n) den Korrekturfaktor bezeichnet, der an einen Koeffizienten zeitlicher Position n anzuwenden ist, wobei dieser Faktor ungleich Null für n zwischen 0 und M-1 ist und vorgegeben wird durch

$$D(n) = h_{a1}(n+M) \cdot h_{a2}(M-1-n) + h_{a2}(n) \cdot h_{a1}(2M-1-n).$$

8. Decodierverfahren nach einem der Ansprüche 6 und 7, wobei die Informationen über die Analysefenster Indices eines bei der Codierung verwendeten Verzeichnisses (DIC) von Fenstern sind, und wobei bei der Decodierung ein entsprechendes Verzeichnis (DIC') vorgesehen wird, das Synthesefenster entsprechend den bei der Codierung verwendeten Analysefenstern und durch den Korrekturfaktor ($1/D(n)$) vorkorrigiert aufweist, wobei jedes Fenster des entsprechenden Verzeichnisses einen Verzeichnisindex hat, der ausgehend vom an den Decodierer übertragenen Analysefensterindex bestimmbar ist.

9. Decodierverfahren nach einem der Ansprüche 6 und 7, wobei die Informationen über die Analysefenster Indices eines bei der Codierung verwendeten Verzeichnisses (DIC) von Fenstern sind, und wobei bei der Decodierung ein gleiches Verzeichnis vorgesehen wird, das jeweilige Fenster aufweist, die von Prototyp-Filtern einer Analysefilterbank bei der Codierung stammen, und wobei bei der Decodierung angewendet wird:

- eine Invertierung zeitlicher Positionen,

- und der Korrekturfaktor (1/D(n)) der Koeffizienten eines Fensters des Verzeichnisses, wenn die Schätzung des Korrekturfaktors für einen Koeffizienten bis auf eine vorbestimmte Schwelle deutlich anders als 1 ist.

10. Decodierverfahren nach einem der Ansprüche 6 bis 9, wobei mindestens ein Teil der Synthesefenster eine gewählte Anzahl von aufeinanderfolgenden Gewichtungskoeffizienten des Werts Null am Fensteranfang aufweist, und die gewählte Anzahl von Koeffizienten Null ($M_z$) niedriger als ein Viertel der Gesamtanzahl von Koeffizienten (2M) eines Fensters ist.

11. Decodierverfahren nach Anspruch 10, wobei ein Synthesevorgang vorgesehen wird, indem ein Gewichtungsfenster entsprechend zwei Teilen von zeitlich umgekehrten Analysefenstern verwendet wird, wobei der Gewichtungsvorgang durch das Synthesefenster durch eine Addition fortgesetzt wird,
wobei die mit $h_{a1}$ und $h_{a2}$ bezeichneten Analysefensterteile abhängig von einem mit h(n) bezeichneten Initialisierungsfenster gemäß Ausdrücken der Art:

$h_{a1}(n+M)=h(n+M)/\Delta(n)$ und $h_{a2}(n)=h(n)/\Delta(n)$ ausgedrückt werden, wobei die Anzahl M so ist, dass ein Block 2M Tastproben aufweist, und n ein zeitlicher Index ist, derart, dass gilt $0 \leq n < M$, wobei $\Delta(n)$ ein Normalisierungsfaktor ungleich Null ist, der für jeden Index n so definiert wird, dass gilt $0 \leq n < M$.

12. Decodierverfahren nach einem der Ansprüche 10 und 11, wobei zwei mit $h_{s1}$ und $h_{s2}$ bezeichnete Synthesefensterteile direkt ausgehend von einem mit h(n) bezeichneten Initialisierungsfenster bestimmt werden, das eine gewählte Anzahl ($M_z$) von Koeffizienten Null an seinem Anfang enthält, gemäß Ausdrücken der Art:

$h_{s1}(n+M)=h(n+M)/\Delta(n)$ und $h_{s2}(n)=h(n)/\Delta(n)$, $0 \leq n < M$, wobei die Anzahl M so ist, dass ein Block 2M Tastproben aufweist, und n ein zeitlicher Index derart ist, dass gilt $0 \leq n < M$,
wobei $\Delta(n)$ ein Normalisierungsfaktor ungleich Null ist, der für jeden Index n derart definiert ist, dass gilt $0 \leq n < M$.

13. Verfahren nach einem der Ansprüche 11 und 12, wobei der Normalisierungsfaktor durch einen Ausdruck der Art:

$$\Delta(n) = \sqrt{h(n)h(2M - 1 - n) + h(n + M)h(M - 1 - n)}$$

definiert wird.

14. Verfahren nach einem der Ansprüche 12 und 13, **dadurch gekennzeichnet, dass** das Initialisierungsfenster h(n) ausgedrückt wird durch:

$$h(n + M_z) = sin\left[\frac{p}{2M-M_z}\left(n + \frac{1}{2}\right)\right]$$

h(n)=0 für $0 \leq n < M_z$ und $\qquad$ für $0 \leq n < 2M-M_z$,
wobei $M_z$ die gewählte Anzahl von Koeffizienten Null am Anfang des Initialisierungsfensters ist.

15. Codiervorrichtung eines digitalen Signals durch Transformation mit Überlagerung, die Gewichtungsfenster verwendet, **dadurch gekennzeichnet, dass** sie für die Durchführung des Verfahrens nach einem der Ansprüche 1 bis 5 konfiguriert ist.

16. Decodiervorrichtung eines digitalen Signals durch Transformation mit Überlagerung, die Gewichtungsfenster verwendet, **dadurch gekennzeichnet, dass** sie für die Durchführung des Verfahrens nach einem der Ansprüche 6 bis 14 konfiguriert ist.

17. EDV-Programm, das dazu bestimmt ist, im Speicher einer Codier- oder Decodiervorrichtung gespeichert zu werden, **dadurch gekennzeichnet, dass** es Anweisungen für die Durchführung des Codierverfahrens nach einem der Ansprüche 1 bis 5 oder des Decodierverfahrens nach einem der Ansprüche 6 bis 14 aufweist, wenn die Anweisungen von einem Prozessor der Vorrichtung ausgeführt werden.

**Claims**

1. Method for coding a digital signal, by transform with overlap using weighting windows,

in which two blocks of samples of the signal, which are consecutive and of the same size (2*M*), are weighted respectively by a first ($h_{a1}$) and a second analysis window ($h_{a2}$), and said first and second windows each comprising a rising edge and a falling edge, the rising edge of the second window ($h_{a2}$) is different from the falling edge of the time-reversed first window ($h_{a1}$).

2. Coding method according to Claim 1, in which said first and second windows are chosen independently of one another, according to a criterion specific to characteristics of the signal which are determined on each of the two blocks.

3. Coding method according to Claim 2, in which the criterion for choosing a weighting window is an element or a combination of elements from among:

   - a maximization ($G_{TC}$) of the coding gain,
   - an entropy minimization ($J_H$) of the transformed samples,
   - an optimization ($J_{RD}$) between a distortion due to the coding/decoding and a bitrate required by said coding.

4. Coding method according to one of Claims 1 to 3, in which each weighting window chosen for the coding of a block is selected from a dictionary of possible weighting windows, a window index being associated with each window of said dictionary, and in which the index of the selected window is transmitted to a decoder, so as to use on decoding a window homologous to the window selected on coding.

5. Coding method according to one of the preceding claims, in which at least one part of the analysis windows comprises a chosen number ($M_z$) of successive weighting coefficients of zero value at the end of the window, and said chosen number of zero coefficients ($M_z$) is less than a quarter of the total number of coefficients (2*M*) of a window.

6. Method for decoding a digital signal, by transform with overlap using weighting windows, in which two blocks of samples of the signal, which are consecutive and of the same size (2*M*), are weighted respectively by a first ($h_{s1}$) and a second synthesis window ($h_{s2}$), in which, said first and second windows each comprising a rising edge and a falling edge, the rising edge of the second window ($h_{s2}$) is different from the falling edge of the time-reversed first window ($h_{s1}$) and in which information ($cod(ha_i)$) is received from a coder about analysis windows used successively on coding, said first and second synthesis windows ($h_{s1}$, $h_{s2}$) are deduced from first and second analysis windows ($h_{a1}$, $h_{a2}$) used successively on coding, the first and respectively the second synthesis window being deduced from the second and respectively from the first analysis window by inversion of temporal positions of weighting coefficients of the second and respectively of the first analysis window, and by application of a corrective factor (1/D(n)) to each weighting coefficient of the second and respectively of the first analysis window.

7. Decoding method according to Claim 6, in which the first synthesis window denoted $h_{s1}$ and the second synthesis window denoted $h_{s2}$ are deduced from the first and second analysis windows respectively denoted $h_{a1}$ and $h_{a2}$ by relations of the type:

$$\begin{cases} h_{s1}(n+M) = \dfrac{h_{a2}(M-1-n)}{D(n)} \\[2em] h_{s2}(n) = \dfrac{h_{a1}(2M-1-n)}{D(n)} \end{cases}$$

where:

   - the number *M* is such that a block of samples comprises 2M samples,
   - *n* is a temporal position index lying between 0 and *M*-1,
   - the notation $h(n)$ designates the weighting coefficient of the window *h* and of temporal position of index *n*,
   - the notation - *n* designates the opposite of the index *n*, manifesting said inversion of temporal positions,

- and $D(n)$ designates said corrective factor to be applied to a temporal position coefficient $n$, this factor being non-zero for $n$ lying between 0 and $M$-1 and given by

$$D(n) = h_{a1}(n + M) \cdot h_{a2}(M - 1 - n) + h_{a2}(n) \cdot h_{a1}(2M - 1 - n).$$

8. Decoding method according to one of Claims 6 and 7, in which the information about the analysis windows is indices of a windows dictionary (DIC) used on coding, and in which there is provided, on decoding, a homologous dictionary (DIC') comprising synthesis windows homologous to the analysis windows used on coding and pre-corrected by said corrective factor ($1/D(n)$), each window of the homologous dictionary having a dictionary index determinable on the basis of said analysis window index transmitted to the decoder.

9. Decoding method according to one of Claims 6 and 7, in which the information about the analysis windows is indices of a windows dictionary (DIC) used on coding, and in which there is provided, on decoding, one and the same dictionary comprising respective windows arising from prototype filters of a bank of analysis filters on coding, and in which, on decoding, there are applied:

  - an inversion of temporal positions,
  - and said corrective factor ($1/D(n)$) to the coefficients of a window of the dictionary if the estimation of the corrective factor for a coefficient is substantially different from 1 to within a predetermined threshold.

10. Decoding method according to one of Claims 6 to 9, in which at least one part of the synthesis windows comprises a chosen number of successive weighting coefficients of zero value at the start of a window, and said chosen number of zero coefficients ($M_z$) is less than a quarter of the total number of coefficients (2M) of a window.

11. Decoding method according to Claim 10, in which there is provided a synthesis operation using a weighting window corresponding to two portions of analysis windows which are time-reversed, the operation of weighting by the synthesis window continuing with an addition, said portions of analysis windows, denoted $h_{a1}$ and $h_{a2}$ being expressed as a function of an initialization window denoted $h(n)$ according to expressions of the type:

  $h_{a1}(n + M) = h(n + M)/\Delta(n)$ and $h_{a2}(n) = h(n)/\Delta(n)$, where the number $M$ is such that a block comprises $2M$ samples and $n$ is a temporal index such that $0 \leq n < M$, $\Delta(n)$ being a non-zero normalization factor defined for any index $n$ such that $0 \leq n < M$.

12. Decoding method according to one of Claims 10 and 11, in which two synthesis window portions denoted $h_{s1}$ and $h_{s2}$ are determined directly on the basis of an initialization window denoted $h(n)$ containing a chosen number ($M_z$) of zero coefficients at its start, according to expressions of the type:

$$h_{s1}(n + M) = h(n + M)/\Delta(n) \text{ and } h_{s2}(n) = h(n)/\Delta(n), \ 0 \leq n < M,$$

where the number $M$ is such that a block comprises $2M$ samples and $n$ is a temporal index such that $0 \leq n < M$, $\Delta(n)$ being a non-zero normalization factor defined for any index $n$ such that $0 \leq n < M$.

13. Method according to one of Claims 11 and 12, in which said normalization factor is defined by an expression of the type:

$$\Delta(n) = \sqrt{h(n)h(2M - 1 - n) + h(n + M)h(M - 1 - n)}$$

14. Method according to one of Claims 12 and 13, **characterized in that** the initialization window $h(n)$ is expressed by:

$$h(n+M_z)=\sin\left[\frac{p}{2M-M_z}\left(n+\frac{1}{2}\right)\right]$$

$h(n)=0$ for $0\leq n<M_z$ and $\qquad$ for $0\leq n<2M-M_z$, where $M_z$ is said chosen number of zero coefficients at the start of an initialization window.

15. Device for coding a digital signal, by transform with overlap using weighting windows, **characterized in that** it is configured for the implementation of the method according to one of Claims 1 to 5.

16. Device for decoding a digital signal, by transform with overlap using weighting windows, **characterized in that** it is configured for the implementation of the method according to one of Claims 6 to 14.

17. Computer program intended to be stored in memory of a coding or decoding device, **characterized in that** it comprises instructions for the implementation of the coding method according to one of Claims 1 to 5 or of the decoding method according to one of Claims 6 to 14, when the instructions are executed by a processor of the device.

BA Q COD BS

| FA1 | Q1 | COD1 | FS1 |
| FA2 | Q2 | COD2 | FS2 |
| ... | ... | ... | ... |
| FAn | Qn | CODn | FSn |

X → → X'

# FIG.1.

$X_{t,k}$

| Xt(K) | Xt+1(K) | Xt+2(K) |

| $T^{-1}$ | $T^{-1}$ | $T^{-1}$ |

$x_t^{inv}$

$z_n$

MISE À JOUR MÉMOIRE

MISE À JOUR MÉMOIRE

$\hat{x}_n = x_n$

| Xt(n) | Xt+1(n) |

# FIG.2.

FIG.3.

FIG.4.

FIG.5.

FIG.6.

FIG.7.

FIG.8.

FIG.9.

FIG.10A.

FIG.10B.

FIG.11.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **EDLER B.** CODIERUNG VON AUDIOSIGNALEN MIT UEBERLAPPENDER TRANSFORMATION UND ADAPTIVEN FENSTERFUNKTIONEN. *FREQUENZ, SCHIELE UND SCHON,* 01 Septembre 1989, vol. 43 (9), ISSN 0016-1136, 252-256
- **SMART G et al.** Filter bank design based on time domain aliasing cancellation with non-identical windows. *PROCEEDINGS OF THE INTERNATIONAL CONFERENCE ON ACOUSTICS, SPEECH, AND SIGNAL PROCESSING (ICASSP),* 19 Avril 1994, vol. iii, ISBN 978-0-7803-1775-8, III-185-III-188
- Information technology - Coding of audio-visual objects - Part 3: Audio. *ISO/IEC,* 2001, 14496-3
- **P. ONNO.** Bancs de Filtres et quantification vectorielle sur réseau - Etude conjointe pour la compression d'images. *thèse de l'Université de Rennes,* 1996, vol. 1